(19) Europäisches Patentamt
European Patent Office
Office européen des brevets

(11) **EP 4 565 014 A1**

(12) **EUROPEAN PATENT APPLICATION**
published in accordance with Art. 153(4) EPC

(43) Date of publication:
04.06.2025 Bulletin 2025/23

(21) Application number: 23845432.6

(22) Date of filing: 20.07.2023

(51) International Patent Classification (IPC):
*H05K 3/00* (2006.01)

(52) Cooperative Patent Classification (CPC):
H05K 3/00

(86) International application number:
PCT/CN2023/108410

(87) International publication number:
WO 2024/022221 (01.02.2024 Gazette 2024/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.07.2022 CN 202210904304

(71) Applicant: BEIJING YOUZHUJU NETWORK
TECHNOLOGY CO. LTD.
Beijing 101299 (CN)

(72) Inventors:
• ZHANG, Ying
  Beijing 100028 (CN)
• MEI, Meng
  Beijing 100028 (CN)
• REN, Yuanlin
  Beijing 100028 (CN)
• JING, Yinglong
  Beijing 100028 (CN)
• WANG, Jian
  Beijing 100028 (CN)

(74) Representative: Dentons UK and Middle East LLP
One Fleet Place
London EC4M 7WS (GB)

(54) **TOPOLOGICAL STRUCTURE FOR IP CORE, AND IP CORE**

(57) Disclosed in the embodiments of the present disclosure is a topological structure for an IP core. The topological structure comprises a first topological structure and a second topological structure, wherein the first topological structure comprises a drive chip, multi-level first signal lines and at least two first loads, a signal output end of a previous-level first signal line being connected to signal input ends of two next-level first signal lines which are connected in parallel, a signal input end of a first-level first signal line being connected to a signal output end of the drive chip, and an output end of each last-level first signal line being connected to a first load; and the second topological structure comprises a plurality of branch structures, each of which comprises at least one second load, a signal input end of each branch structure being connected to a signal output end of a last-level first signal line of the first topological structure. A new topological structure is provided for an IP core, so as to realize diversified IP core topological structures to adapt to different requirements.

Figure 2

## Description

## CROSS-REFERENCE TO RELATED APPLICATIONS

The present application claims priority to Chinese Patent Application No. 202210904304.5, entitled "TOPOLOGICAL STRUCTURE FOR IP CORE, AND IP CORE" filed on Jul. 29, 2022, the full text of which is incorporated by reference herein.

## TECHNICAL FIELD

The present disclosure relates to the field of integrated circuit technologies, and in particular a topological structure for a IP core, and an IP core.

## BACKGROUND

With the increasing scale of integrated circuits and the increasing complexity of design, integrated circuit modules with exact functions can be designed as reusable IP cores in order to design and manufacture integrated circuits implementing various functions more quickly. In the design of integrated circuits, an IP core refers to a reusable integrated circuit design module with some exact function that has been verified.

A storage integrated circuit module with a high-speed data read and write function can make a drive chip and a double data rate synchronous dynamic random access memory (DDR) into an IP core for reuse in different integrated circuits.

## SUMMARY

This disclosure is provided to introduce concepts in a simplified form, which will be described in detail in the section of specific implementation later. The disclosure is not intended to identify key features or essential features of the claimed technical solution, nor is it intended to limit the scope of the claimed technical solution.

Embodiments of the present disclosure provide a topological structure for an IP core and an IP core.

According to a first aspect, an embodiment of the present disclosure provides a topological structure for an IP core, which comprises: a first topological structure and a second topological structure, wherein the first topological structure comprises a drive chip, multi-stage first signal lines and at least two first loads; a signal output of one first signal line of a previous stage is connected with signal inputs of two parallel first signal lines of the next stage, a signal input of a first signal line of a first stage is connected with a signal output of the drive signal; an output of each of the first signal lines of a last stage is connected with one first load; the second topological structure comprises a plurality of branch structures, each of the branch structures comprises at least one second load, and a signal input of each of the branch structures is connected with a signal output of one first signal line of a last stage of the first topological structure.

According to a second aspect, an embodiment of the present disclosure provides an IP core, comprising a substrate, a drive chip provided on the substrate, a plurality of loads, and a connection structure between the plurality of loads and the drive chip; a topological structure connected between the plurality of loads and the drive chip comprises a first topological structure and a second topological structure; the first topological structure comprises a drive chip, multi-stage first signal lines and at least two first loads; a signal output of one first signal line of a previous stage is connected with signal inputs of two parallel first signal lines of the next stage, and a signal input of a first signal line of a first stage is connected with a signal output of the drive signal; an output of each of the first signal line of a last stage is connected with one first load; the second topological structure comprises a plurality of branch structures, each of the branch structures comprises at least one second load, and a signal input of each of the branch structures is connected with a signal output of one first signal line of a last stage of the first topological structure.

By providing in the topological structure a first topological structure and a second topological structure, wherein the first topological structure comprises a drive chip, multi-stage first signal lines and at least two first loads; a signal output of one first signal line of a previous stage is connected with signal inputs of two parallel first signal lines of the next stage, and a signal input of a first signal line of a first stage is connected with a signal output of the drive signal; an output of each of the first signal line of a last stage is connected with one first load; and wherein the second topological structure comprises a plurality of branch structures, each of the branch structures comprises at least one second load, and a signal input of each of the branch structures is connected with a signal output of one first signal line of a last stage of the first topological structure, the topological structure for an IP core and the IP core provided by the embodiments of the present disclosure realize a combination of the first topological structure and the second topological structure to form the topological structure for the IP core, and provide a new topological structure for the IP core, thus realizing diversified topological structures of the IP core to adapt to different requirements.

## BRIEF DESCRIPTION OF THE DRAWINGS

The above and other features, advantages and aspects of various embodiments of the present disclosure will become more apparent by referring to the following specific implementations when taken in conjunction with the accompanying drawings. Throughout the drawings, the same or similar reference numerals indicate the same or similar elements. It should be understood that the drawings are schematic, and the components and elements are not necessarily drawn to scale.

Fig. 1 is a schematic structural diagram of a topological structure for an IP core according to the present disclosure;

Fig. 2 is another schematic structural diagram of a topological structure for an IP core according to the present disclosure;

Fig. 3 is a schematic eye diagram of an IP core provided according to the present disclosure.

## DETAILED DESCRIPTION

Embodiments of the present disclosure will be described in more detail below with reference to the accompanying drawings. Although some embodiments of the present disclosure are shown in the drawings, it should be understood that the present disclosure can be implemented in various forms and should not be construed as limited to the embodiments set forth here, but rather, these embodiments are provided for a more thorough and complete understanding of the present disclosure. It should be understood that the drawings and embodiments of the present disclosure are only used for illustrative purposes, and are not used to limit the protection scope of the present disclosure.

It should be understood that the steps described in the method implementations of the present disclosure can be executed in a different order and/or in parallel. Furthermore, method implementations can include additional steps and/or omit executing the illustrated steps. The scope of the present disclosure is not limited in this respect.

As used herein, the term "including" and its variants are open-ended including, that is, "including but not limited to". The term "based on" is "at least partially based on". The term "one embodiment" means "at least one embodiment"; the term "another embodiment" means "at least one other embodiment"; the term "some embodiments" means "at least some embodiments". Related definitions of other terms will be given in the following description.

It should be noted that the concepts of "first" and "second" mentioned in the present disclosure are only used to distinguish different means, modules or units, and are not used to limit the order or interdependence of the functions executed by these means, modules or units.

It should be noted that the modifications of "one" and "a plurality of" mentioned in the present disclosure are schematic rather than limiting, and those skilled in the art should understand that unless the context clearly indicates otherwise, they should be understood as "one or a plurality of".

Names of messages or information exchanged among multiple means in the implementations of the present disclosure are only used for illustrative purposes, and are not used to limit the scope of these messages or information.

It should be noted that the embodiments in the present disclosure and the features in the embodiments can be combined with each other without conflict.

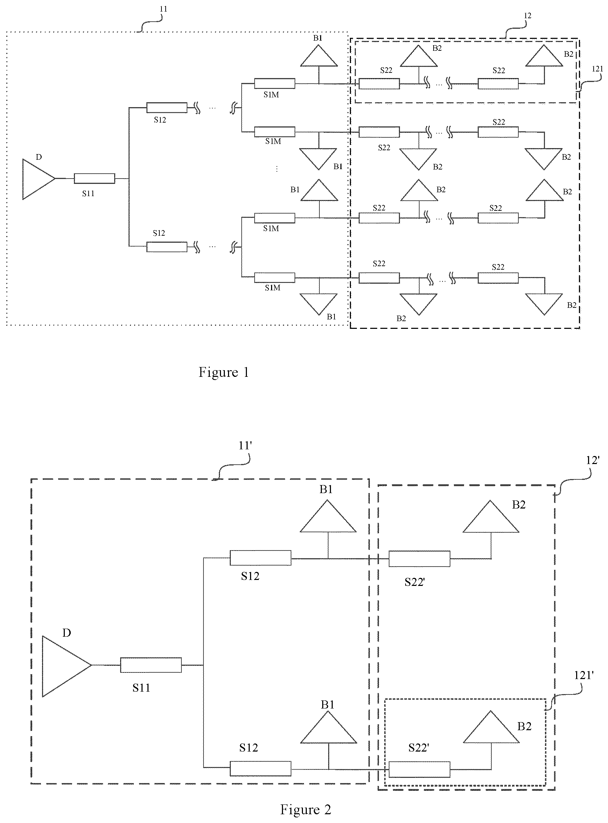

Please refer to Fig. 1, which shows a schematic diagram of a topological structure for an IP core of the present disclosure. As shown in Fig. 1, the topological structure for the IP core includes a first topological structure 11 and a second topological structure 12. The first topological structure 11 includes a drive chip D, multi-stage first signal lines S11, S2,.., S1M, and at least two first loads B1. The drive chip D here can include various chips for generating operating signals, including but not limited to Field-Programmable Gate Array (FPGA), System on Chip (SoC) and the like. The drive chip D can send out a clock signal. The clock signal here can be a control signal for controlling the load. The control signal here can be, for example, a controller and address signal (CA).

In the first topological structure, a number of stages of the multi-stage first signal lines S11, S2,.., S1M can be set according to a specific application scenario. An output of a first signal line of a previous stage is connected with signal inputs of two parallel first signal lines of the next stage. An input of a first signal line of a first stage is connected with an output of the drive chip. An output of each of the first signal lines of a last stage is connected with one first load B1.

That is to say, signal inputs of the two first signal lines of a next stage are connected in parallel and then connected with a signal output of the first signal line of the previous stage thereof.

The first signal line of the first stage includes one first signal line. The signal input of the first signal line of the first stage is connected with a signal output of the drive chip D.

The output of the first signal line S1M of the last stage is connected with the first load.

If the multi-stage first signal lines have two stages, then the second stage of first signal line includes two first signal lines; the first stage of first signal line includes one first signal line. If the multi-stage first signal lines have three stages, then a first stage of first signal line among the three stages of first signal lines includes one first signal line, a second stage of first signal lines include two first signal lines, and a third stage of first signal lines includes four first signal lines. If the multi-stage first signal lines have four stages, then a first stage of first signal line among the four stages of first signal lines includes one first signal line; a second stage first signal lines include two first signal lines, a third stage of first signal lines include four first signal lines, and a fourth stage of first signal lines include eight first signal lines, and so on.

The output of the first signal line of the last stage is connected with the first load B1.

In the first topological structure, the number B1 of the first loads can be less than or equal to the number of the first signal lines of the last stage. The control signal sent by the drive chip D can be transmitted to the output of the first signal lines of the last stage through the first signal lines of all stages, and then transmitted to the first load, so as to control the operation of the first load B1.

The above first topological structure can be a T-shaped topological structure.

The second topological structure 12 includes a plurality of branch structures 121, and each of the branch structures 121 includes at least one second load B2. A signal input of each of the branch structures 121 is connected with the output of one first signal line of the last stage of the first topological structure 11.

For each of the branch structures 121, the at least one second load B2 in the branch structure 121 can be connected in series. Each of the second loads B2 in a branch structure 121 can be connected by a second signal line S22.

Since the signal input of each of the branch structures 121 is connected with the output of one first signal line S1M of the last stage of the first topological structure 11, the control signal sent by the drive chip D can be transmitted to the second load B2 through the first signal lines of all stages and the second signal lines S22.

The number of the branch structures 121 in the second topological structure 12 can be less than or equal to the number of the first signal lines of the last stage in the first topological structure.

The output of the first signal lines of the last stage of the first topological structure 11 is connected with the input of one second signal line in the branch structure 121. The output of the second signal line is connected with a second load B2. In some application scenarios, a branch structure includes two second loads. The branch structure can include a plurality of second signal lines. An input of a first second signal line in the branch structure is connected with an output of one first signal line of the first signal lines of the last stage of the first topological structure. An output of the first one of the second signal lines is connected with one second load. In addition, the output of the first one of the second signal lines S22 is also connected with the input of the second one of the second signal lines S22. The output of the second one of the second signal lines S22 is connected with one second load.

The second topological structure 12 can be a fly_by structure.

The number of the second loads in the branch structure in the second topological structure 12 can be determined according to the drive capability of the drive chip.

The first load B1 and the second load B2 can be electronic components for achieving the same function, for example, electronic components for data storage. Specifically, the first load and the second load can be a double data rate synchronous dynamic random access memory (DDR), a low power double data rate synchronous dynamic random access memory (LPDDR), etc.

The topological structure for an IP core provided by the present embodiment forms a topological structure for an IP core by combining the first topological structure with the second topological structure, and provides a new topological structure for the IP core, so as to realize diversified topological structures of the IP core to adapt to different requirements.

In some application scenarios, in the first topological structure 11, an equivalent impedance formed by two parallel first signal lines of a next stage is equal to an impedance of one first signal line of the previous stage connected therewith.

Respective impedance of the two parallel first signal lines of the next stage can be equal.

For example, among the first signal lines of the second stage, an equivalent impedance formed by two parallel first signal lines of the second stage is equal to an impedance of the first signal line of the first stage connected with the two parallel first signal lines of the second stage.

For example, if the impedance of the first signal line of the first stage is 10 ohms, then the impedance of each of the first signal lines of the second stage connected with the first signal line of the first stage can be 20 ohms. An equivalent impedance of the first signal lines of the second stage after being parallel connected can be 10 ohms, which is equal to the impedance of the first signal line of the first stage.

In these application scenarios, since an equivalent impedance formed by two parallel first signal lines of the next stage is set to be equal to an impedance of one first signal line of the previous stage connected therewith, and impedances of the two parallel first signal lines of the next stage are set to be equal, the impedances of the first signal lines of all stages can be ensured to have good continuity.

In some optional implementations, the branch structure of the second topological structure 12 includes at least one second signal line connected with a second load. Here, the second signal line can include a second signal line S22 connected with the first signal line of the last stage in the first topological structure, and a second signal line S22 between the second loads B2.

In these optional implementations, an impedance of each of the second signal lines in the branch structure 121 of the second topological structure 12 is also set to be equal to the impedance of the first signal line connected with the branch structure, so that the impedances of the signal lines in the overall topological structure have good continuity.

In some optional implementations, the above first topological structure 11 includes two stages of first signal lines and two first loads.

That is to say, the first topological structure 11 includes one first signal line of the first stage and two first signal lines of the second stage. The two first signal lines of the second stage are connected in parallel and then connected with an output of the first signal line of the first stage. The outputs of the two first signal lines of the second stage are respectively connected with the first load.

In some optional implementations, the second topological structure 12 can include two branch structures. Each of the branch structures 121 includes one second load.

In this way, the second topological structure 12 can include two second loads B2 in total.

In some application scenarios, please refer to Fig. 2, which shows a schematic diagram of the topological structure for the IP core provided by the present disclosure. As shown in Fig. 2, the first topological structure 11' can include two stages of first signal lines S11 and S12.

The second topological structure 12' includes two branch structures 121', and an input of the second signal line S22' of each branch structure can be connected with an output of the first signal line S12 of the second stage of the first topological structure 11'. An output of the second signal line S22' of the branch structure 121' is connected with one second load B2.

In these optional implementations, two stages of first signal lines S11 and S12 are provided in the first topological structure 11', two first loads B1 are provided in the first topological structure 11', and two branch structures 121' are provided in the second topological structure 12'. Each of the branch structures 121' is provided with one second load B2. The output of the first topological structure 11' is connected with the input of one branch structure 121' of the second topological structure 12', so that the whole topological structure can correspond to four loads. This topological structure is suitable for the situation where the drive chip needs to drive four loads, which is difficult to be implemented by using the first topological structure or the second topological structure alone.

An embodiment of the present disclosure also provides an IP core. The IP core comprises a substrate, a drive chip provided on the substrate, a plurality of loads, and a connection structure between the plurality of loads and the drive chip; a topological structure formed by the connections between the plurality of loads and the drive chip comprises a first topological structure and a second topological structure; the first topological structure comprises the drive chip, multi-stage first signal lines and at least two first loads; a signal output of one first signal line of a previous stage is connected with an signal input of two parallel first signal lines of a next stage, and a signal input of a first signal line of a first stage is connected with a signal output of the drive signal; an output of each of the first signal lines of a last stage is connected with one first load; the second topological structure comprises a plurality of branch structures, each of the branch structures comprises at least one second load, and a signal input of each of the branch structures is connected with a signal output of one first signal line of the last stage of the first topological structure.

The above drive chip can be various chips that can send out clock signals, such as Field Programmable Gate Array (FPGA), System on Chip (SoC), and Microcontroller Unit (MCU), etc. The above load can be an electronic component for realizing one or more functions. In some application scenarios, the above load can be an electronic component for data storage. For example, the above load can be DDR, LPDDR, etc.

The drive chip, the first load and the second load can be connected with the substrate by means of welding, gluing, etc.

The above first signal lines of all stages can be made of a substrate material.

In addition, the branch structure can include a second signal line. Each of the first signal lines and second signal lines can be made of a conductive material in the substrate.

The branch structure of the second topological structure can include a second signal line, which can include a second signal line connected between the output of the first signal line of the last stage of the first topological structure and the second load, and can also include a second signal line connected between different second loads.

In this example, the above substrate can be various substrates which are used as drive chips and load carriers, and in which signal lines in the second topological structure are made for the first signal lines.

As an implementation, the above substrate can be a printed circuit board (PCB), also known as a printed circuit substrate. The printed circuit substrate includes a copper-clad layer and an insulating layer, and connecting wires and pads can be made on the copper-clad layer through printing, etching and other processes.

The above first topological structure includes multi-stage first signal lines, and the second topological structure includes a plurality of branch structures, each of the branch structures includes at least one second signal line. The above first and second signal lines are formed in a printed circuit board. It is possible to connect the signal output of the drive chip with the input of the first signal line of the first stage through the pad. It is also possible to connect the output of the first signal line of the last stage of the first topological structure with the input of the first load. It is also possible to connect the output of a second signal line of the second topological structure with the signal input of the second load.

If the PCB is a multilayer board, the first signal lines and the second signal lines can include signal lines provided in a horizontal plane of at least one copper-clad layer, and can also include signal lines across different copper-clad layers by means of vias.

When the first signal lines of each of the stages are made through the PCB, impedances of the first signal lines of each of the stages can be controlled, so that an equivalent impedance of two parallel first signal lines of the next stage is equal to an impedance of the first signal line of the previous stage connected with the two parallel first signal lines, so as to ensure the continuity of the impedances of the first signal lines of each of the stages.

It is also required to control the impedance of the second signal lines of each of the branch structure when making the second signal lines of each of the branch structure through the PCB. For each of the branch structure, it is possible to control impedances of each of the second signal lines on the branch structure to be equal. In addition, it is also required to control the impedance of the second signal line in the branch structure to be equal to that of the first signal line connected with the branch structure.

It should be noted that if the signal line formed by crossing different copper-clad layers by means of vias is a first signal line, then an impedance of the first signal line should be controlled according to the relationship between the impedance of the first signal line and the previous-stage impedance connected therewith. If the signal line formed by crossing different copper-clad layers by means of vias is a second signal line, then an impedance of the second signal line can be controlled according to the impedance of the first signal line connected with the branch structure where the second signal line is located. Specifically, the impedance of the first signal line or the impedance of the second signal line can be adjusted by optimizing the value of the antipad, so that impedances of all nodes of the IP core have good continuity.

Various signal lines can be provided in the PCB to connect the drive chip and the load. The printed circuit board in the PCB is composed of an insulating bottom plate, connecting wires, and pads for assembling and welding electronic components, which has the dual functions of the conducting lines and the insulating base plate. It can replace complex wirings and realize the electrical connections between components in the circuit.

A PCB substrate can be selected according to corresponding requirements of the impedance of the first signal line. For example, a PCB substrate material that can realize the impedance of the first signal line of the last stage is selected to make the signal line. When the load corresponds to the high-speed transmission rate, the lower the Dk of the PCB material, the higher the quality of high-speed transmission signals, and the higher the speed will be. Dk is an index to measure the capability of materials to store electrical properties. The lower the Dk, the higher the signal transmission speed in the medium and the stronger the capability.

Dk is a Dielectric Constant, a dielectric constant (Dk) the PCB material or a relative dielectric constant. Dk is not a constant, for example, the Dk of the material will change with the change of frequency. In the present disclosure, a PCB substrate material with a Dk value less than a preset threshold is selected to make an IP core. The preset threshold here can be set according to a specific application scenario, which is not limited here.

The first topological structure can be a T-shaped topological structure. In order to make the impedances of the first topological structure have good continuity, when the first signal lines of all stages of the first topological structure are provided on the PCB substrate, respective equivalent impedance of the two parallel first signal lines of the next stage are twice an impedance of the first signal line of the previous stage connected with the two first signal lines. In this way, an equivalent impedance of the two parallel first signal lines of the next stage after being connected in parallel is equal to an impedance of the first signal line of the previous stage connected with the two first signal lines.

In the IP core provided by this example, by means of a combination of the first topological structure and the second topological structure on the substrate, the IP core in which the drive chip drives a plurality of loads is realized at a low manufacturing cost.

In some embodiment, the first load and the second load can be storage components with a high-speed data read and write function. The first topological structure provided in the substrate comprises two stages of first signal lines and two first loads; the second topological structure includes two branch structures, each of which includes one second load. Correspondingly, the above IP core can include one drive chip and four loads. The drive chip can be welded or glued on the above substrate. Correspondingly, the first signal lines formed in the above substrate according to the topological structure include two stages. An input of the first signal line of the first stage is connected with an output of the drive chip. The first signal line of the first stage includes one first signal line. The second signal line of the second stage includes two parallel first signal lines. An impedance of one second-stage first signal line can be twice that of the first-stage first signal line. The branch structure provided in the substrate can include two branch structures. Each of the branch structures can include one second load. The branch structure can include one second signal line. The impedance of the second signal line in each of the branch structures can be equal to the impedance of one second-stage first signal line connected with the branch structure.

In these optional implementations, the above first topological structure corresponds to a T-shaped topology, and the second topological structure corresponds to a fly_by topological structure. The above substrate can be a PCB substrate. By using the topological structure composed of the first topological structure and the second topological structure to make the IP core, the drive chip in the IP core can drive four loads smoothly.

If the load is a high-speed read and write storage functional component, such as 64-bit LPDDR5, the drive chip is SoC. When a conventional T-shaped topological structure is used to realize driving four loads by one drive chip, a double T-shaped topological structure is needed. Compared with the case of the single T-shaped topological structure, there is one more branch structure and a number of loads doubled, so that if the IP core wants to have a good eye diagram result, the drive chip needs stronger drive capability, while a proportional relationship that a single signal line of the next stage is twice the signal line of the previous stage connected therewith is strictly satisfied. However, in practical engineering, when the first signal line is made on the PCB, the greater the stage number of the first signal line in the T-shaped topology, the greater the impedance of the first signal line of this stage. On one hand, since the impedance of the signal line that can be implemented on the PCB has an upper limit and cannot be infinite, it is possible that the impedance designed in the T-shaped structure cannot be implemented on the PCB. Therefore, it is difficult to implement the signal lines of the T-shaped topological structure with more stages. On the other hand, due to a deviation of the manufacturing process, an impedance value actually implemented on the PCB has a great deviation. The deviation of the impedance value is related to the magnitude of the impedance value. The greater the stage number of the T-shaped structure, the greater the deviation due to the problem of the manufacturing process, which therefore will lead to poor continuity of the impedances of the first signal lines at all stages and thus lead to the phenomenon of a poor effect of the eye diagram.

In these optional implementations, a combination of the first topological structure and the second topological structure is used, wherein the first topological structure is a T-shaped topological structure and the second topological structure is a fly_by topological structure. Two stages of first signal lines are made in the first topological structure and second signal lines are made in the second topological structure on the PCB by printing, etching and other processes.

Regarding the two stages of first signal lines made on the PCB, a signal input of the first-stage signal line can be connected with a signal output of the drive chip, and outputs of the second-stage first signal lines are connected with two first loads. Two branch structures are made on the PCB, each of which corresponds to one second signal line. A signal input of each second signal line can be connected with an output of one second-stage first signal line. An output of the second signal line is connected with one second load.

In this way, in an implementation of wires corresponding to the above first topological structure, the signal line with the greatest impedance is the second-stage first signal line, and the impedance is twice that of the first-stage first signal line. If a central value of the impedance of the first-stage first signal line is 30 ohms, then a central value of the impedance of the second-stage first signal line is 60 ohms. The 60 ohm wire impedance can be implemented by the current PCB material and manufacturing process. The impedance of the second signal line in a branch structure corresponding to the second topological structure can be equal to the impedance of the second-stage first signal line. Therefore, the impedance of the second signal line can also be implemented by the existing PCB material and manufacturing process. Therefore, for driving four loads, implementing each of the signal lines corresponding to the topological structure of the embodiment shown in Fig. 2 on the PCB can lower the requirements for the PCB substrate and reduce the cost of the IP core.

In these optional implementations, it is also possible to set the impedance of the drive chip, the impedance of the first load and the impedance of the second load to adapt to the first signal line and the second signal line, so as to achieve a better effect of the eye diagram.

Taking the impedance of the first-stage first signal line as 30 ohms as an example, an equivalent impedance of the drive chip can be selected to be close to the impedance (30 ohms) of the first-stage first signal line, for example, 35 ohms is selected as the equivalent impedance of the drive chip. An equivalent impedance of the first load is close to the impedance (60 ohms) of one second-stage first signal line, for example, 55 ohms is selected as the impedance of the first load. An equivalent impedance of the second load is close to the impedance (60 ohms) of the second signal line connected therewith, for example, 55 ohms is selected as the impedance of the second load. Thus, the continuity of the impedances is realized, thus realizing good signal integrity.

In order to better realize the signal integrity, a length of the second signal line can be set according to the signal integrity.

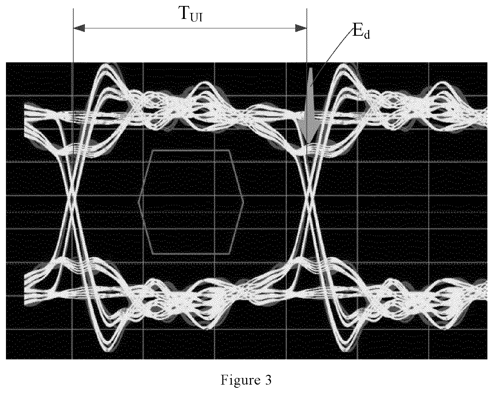

In some optional implementations, the length of the second signal line is determined according to the maximum transmission rate of the signal corresponding to the load and the period of the control signal sent by the drive chip. Please refer to Fig. 3. In the eye diagram shown in Fig. 3, $T_{UI}$ is the period of the control signal. The eye diagram shown in Fig. 3 is formed by integrating the waveform diagram of the control signal with the data transmission signal corresponding to the load.

As an implementation, the ratio of the length of the second signal line to the maximum transmission rate of the data transmission signal corresponding to the load is equal to an integer multiple of half the above period of the control signal. That is to say, the transmission delay of the signal corresponding to the load on the second signal line is an integer multiple of half the above period of the control signal. The above relationship can be expressed by the following formula (1).

$$\frac{L}{V_{max}} = K \times \frac{T_{UI}}{2} \quad (1)$$

where L is the length of the second signal line; $V_{max}$ is the maximum data transmission rate of the signal corresponding to the load; K is a positive integer; $T_{UI}$ is the period length of the control signal.

By setting the length of the second signal line in this way, the position Ed of the second load in the branch structure reflected on the first load corresponding to the first topological structure can be just overlapped on the rising edge or falling edge of the eye diagram of the first load, so that the eye height in the eye diagram will not be affected, and then the sampling decision will not be affected.

In addition, in the process of adjusting the synchronization between the control signal and the data transmission signal on the load, a low-speed section is needed. In the above process of adjusting the synchronization between the control signal and the data transmission signal on the load, the transmission rate of the load that is 1/4 or 3/4 of the maximum transmission rate of the load is used to ensure that the eye height of the control signal meets the corresponding requirements.

The above description is only the explanation of the preferred embodiments of the present disclosure and the applied technical principles. It should be understood by those skilled in the art that the disclosure scope involved in the present disclosure is not limited to the technical solution formed by the specific combination of the above technical features, but also covers other technical solutions formed by any combination of the above technical features or their equivalent features without departing from the above disclosure concept, for example, a technical solution formed by a mutual replacement of the above features with technical features with similar functions disclosed in the present disclosure (but not limited to).

Furthermore, although the operations are depicted in a particular order, this should not be understood as requiring that these operations be performed in the particular order shown or in a sequential order. Under certain circumstances, multitasking and parallel processing may be beneficial. Likewise, although several specific implementation details are contained in the above discussion, these should not be construed as limiting the scope of the present disclosure. Some features described in the context of separate embodiments can also be implemented in combination in a single embodiment. On the contrary, various features described in the context of a single embodiment can also be implemented in multiple embodiments individually or in any suitable sub-combination.

Although the present subject matter has been described in language specific to structural features and/or methodological logical actions, it should be understood that the subject matter defined in the appended Claims is not necessarily limited to the specific features or actions described above. On the contrary, the specific features and actions described above are only exemplary forms for implementing the Claims.

**Claims**

1. A topological structure for an IP core, comprising: a first topological structure and a second topological structure, wherein the first topological structure comprises a drive chip, multi-stage first signal lines and at least two first loads; a signal output of one first signal line of a previous stage is connected with a signal input of two parallel first signal lines of the next stage, and a signal input of the first signal line of a first stage is connected with a signal output of the drive signal; an output of each of the first signal lines of a last stage is connected with one first load; the second topological structure comprises a plurality of branch structures, each of the branch structures comprises at least one second load, and a signal input of each of the branch structures is connected with a signal output of one first signal line of a last stage of the first topological structure.

2. The topological structure according to Claim 1, wherein, in the first topological structure, an equivalent impedance of two parallel signal lines of a next stage is equal to an impedance of one signal line of the previous stage connected therewith.

3. The topological structure according to Claim 1, wherein the branch structure comprises at least one second signal line connected with the second load; an impedance of the second signal line is equal to an impedance of the first signal line connected with the branch structure.

4. The topological structure according to Claim 1, wherein the first topological structure comprises two stages of first signal lines and two first loads.

5. The topological structure according to Claim 1 or 4, wherein the second topological structure comprises two branch structures, and each of the branch structures comprises one second load.

6. An IP core, comprising: a substrate, a drive chip provided on the substrate, a plurality of loads, and a connection structure between the plurality of loads and the drive chip; wherein a topological structure connected between the plurality of loads and the drive chip comprises a first topological structure and a second topological structure;

   Wherein the first topological structure comprises the drive chip, multi-stage first signal lines and at least two first loads; a signal output of one first signal line of a previous stage is connected with a signal input of two parallel first signal lines of the next stage, and a signal input of a first signal line of a first stage is connected with a signal output of the drive signal; an output of each of the first signal lines of a last stage is connected with one first load; the second topological structure comprises a plurality of branch structures, each of the branch structures comprises at least one second load, and a signal input of each of the branch structures is connected with a signal output of one first signal line of a last stage of the first topological structure.

7. The IP core according to Claim 6, wherein the second topological structure comprises second signal lines; the first signal lines and the second signal lines are provided on a PCB.

8. The IP core according to Claim 7, wherein, in the IP core, an equivalent impedance of two parallel first signal lines of a next stage is equal to an impedance of one first signal line of the previous stage connected therewith.

9. The IP core according to Claim 7, wherein, in the IP core, an impedance of at least one second signal line connected with the second load and comprised in the branch structure is equal to an impedance of the first signal line connected with the branch structure.

10. The IP core according to Claim 6, wherein the substrate is provided with two stages of the first signal lines and two first loads;
two branch structures, each of which comprises one second load.

11. The IP core according to Claim 6, wherein a Dk value of the substrate is less than a preset threshold.

12. The IP core according to Claim 7, wherein a length of the second signal line is determined according to a maximum transmission rate of the signal corresponding to the load and a period of a control signal sent by the drive chip.

Figure 1

Figure 2

Figure 3

## INTERNATIONAL SEARCH REPORT

International application No.

**PCT/CN2023/108410**

### A. CLASSIFICATION OF SUBJECT MATTER

H05K 3/00(2006.01)i

According to International Patent Classification (IPC) or to both national classification and IPC

### B. FIELDS SEARCHED

Minimum documentation searched (classification system followed by classification symbols)

IPC:H05K、 H01L

Documentation searched other than minimum documentation to the extent that such documents are included in the fields searched

Electronic data base consulted during the international search (name of data base and, where practicable, search terms used)

CNTXT, ENTXTC, ENTXT, DWPI, IEEE, CNKI: IP核, 拓扑, 芯片, 信号线, T型, 负载, 阻抗, IP core, tree, fly-by, topology, chip, signal line, load, impedance

### C. DOCUMENTS CONSIDERED TO BE RELEVANT

| Category* | Citation of document, with indication, where appropriate, of the relevant passages | Relevant to claim No. |
|---|---|---|
| A | CN 110489803 A (SUZHOU INSPUR INTELLIGENT TECHNOLOGY CO., LTD.) 22 November 2019 (2019-11-22) entire document | 1-12 |
| A | CN 209982807 U (SHENZHEN EDADOC TECHNOLOGY CO., LTD.) 21 January 2020 (2020-01-21) entire document | 1-12 |
| A | CN 107704659 A (BEIJING POLYTECHNIC LEIKE ELECTRONIC INFORMATION TECHNOLOGY CO., LTD.) 16 February 2018 (2018-02-16) entire document | 1-12 |
| A | US 2009146759 A1 (HON HAI PRECISION INDUSTRY CO., LTD.) 11 June 2009 (2009-06-11) entire document | 1-12 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 October 2023** | **13 October 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/108410**

| Patent document cited in search report | | | Publication date (day/month/year) | Patent family member(s) | | | Publication date (day/month/year) |
|---|---|---|---|---|---|---|---|
| CN | 110489803 | A | 22 November 2019 | None | | | |
| CN | 209982807 | U | 21 January 2020 | None | | | |
| CN | 107704659 | A | 16 February 2018 | None | | | |
| US | 2009146759 | A1 | 11 June 2009 | US | 7573353 | B2 | 11 August 2009 |

Form PCT/ISA/210 (patent family annex) (July 2022)

**REFERENCES CITED IN THE DESCRIPTION**

**Patent documents cited in the description**

- CN 202210904304